# EUROPÄISCHE PATENTANMELDUNG

(11) **EP 3 945 107 A1**
(43) Veröffentlichungstag der Anmeldung: **02.02.2022**
(21) Anmeldenummer: 20188129.9
(22) Anmeldetag: 28.07.2020
(51) Int. Cl.: C08K 3/22, C08K 3/30, C08K 3/36, C08K 7/06, C08K 9/06, C08K 3/04

(54) **THERMOPLASTISCHE ZUSAMMENSETZUNGEN VON POLYETHERETHERKETONEN MIT VERBESSERTEN TRIBOLOGISCHEN MATERIALEIGENSCHAFTEN UND VERWENDUNG DIESER**

(71) Anmelder: Evonik Operations GmbH, 45128 Essen (DE)
(72) Erfinder: KUHMANN, Karl, 48249 Dülmen (DE); LINEMANN, Reinhard, 66121 Saarbrücken (DE); SANDHUSEN, Joscha, 45897 Gelsenkirchen (DE); LORENZ, Frank, 59399 Olfen (DE); SCHIEMANN, Vera, 45770 Marl (DE); SCHLARB, Alois K., 67705 Trippstadt (DE); JOSCH, Lena, 67434 Neustadt a.d.W. (DE); BUSSE, Michael, 66386 St. Ingbert (DE); LIN, Leyu, 67663 Kaiserslautern (DE)
(74) Vertreter: Evonik Patent Association

(57) **Zusammenfassung**

Die Erfindung bezieht sich auf eine thermoplastische Zusammensetzung umfassend eine Matrixkomponente A) und eine Füllstoffkomponente B), wobei die Matrixkomponente A) ein Polyetheretherketon ist und die Füllstoffkomponente B) anorganische Partikel und Kohlenstoff-enthaltende Partikel aufweisen, und die Gesamtzusammensetzung zu gleichen oder unterschiedlichen Teilen als Füllstoffkomponente B) hydrophobes Siliziumdioxid, Kohlenstoff-Fasern, Titandioxid-Partikel, Graphit-Partikel und einen partikulären Schmierstoff ausgewählt aus zweiwertigen, metallischen Sulfiden und Erdalkalisulfaten umfassen.

## Beschreibung

Die Erfindung bezieht sich auf eine thermoplastische Zusammensetzung umfassend eine Matrixkomponente A) und eine Füllstoffkomponente B), wobei die Matrixkomponente A) ein Polyetheretherketon umfasst, und die Füllstoffkomponente B) anorganische Partikel und Kohlenstoff-enthaltende Partikel aufweisen, und die Gesamtzusammensetzung zu gleichen oder unterschiedlichen Teilen hydrophobes Siliziumdioxid, Kohlenstoff-Fasern, Titandioxid-Partikel, Graphit-Partikel und einen partikulären Schmierstoff ausgewählt aus zweiwertigen, metallischen Sulfiden und Erdalkalisulfaten aufweist.

Es ist aus EP1511624B1, EP1511625B1 und EP1526296B1 bekannt, Polyetheretherketone für die Herstellung von Gleitlagerverbundwerkstoffen mit einer metallischen Stützschicht herzustellen, wobei der Gleitlagerverbundwerkstoff ein Gleitschichtmaterial auf Basis von PEEK mit Zinksulfid und/oder Bariumsulfat, Kohlenstofffasern, Graphitpartikeln und Titandioxid zur Veränderung der Materialeigenschaften der polymeren Matrix aufweist.

Zur Einsparung von Kohlendioxid und zur Minimierung des Energiebedarfes besteht ein gesteigerter Bedarf an leichten Hochleistungswerkstoffen, deren Eigenschaften denen von metallischen Werkstoffen im Werkzeugbau, Automotivbereich und Flugzeugbau entsprechen, um diese zu substituieren.

Zudem können bestimmte ausgewählte Füllstoffe und deren anisotrope Ausrichtung ganz erheblich die makroskopischen Materialeigenschaften beeinflussen. Des Weiteren können bestimmte Füllstoffe aufgrund erhöhter Temperatureinwirkung oder unter Einwirkung von elektromagnetischer Strahlung als katalytisch aktive Zentren zu einer beschleunigten Zersetzung der polymeren Matrix beitragen. Relevant kann dies insbesondere bei polymeren Matrices mit Heteroatomen werden.

Daher besteht die Aufgabe, eine Zusammensetzung basierend auf Polyetheretherketonen bereitzustellen, die verbesserte tribologische und duktile Eigenschaften, und insbesondere verbesserte Verschleißraten unter erhöhtem Druck und/oder bei erhöhter Temperatureinwirkung aufweisen.

Überraschenderweise wurde nun gefunden, dass hydrophobes Siliziumdioxid, insbesondere hydrophobes pyrogenes Siliziumdioxid in Kombination mit Kohlenstoff-Fasern die Verschleißrate von Polyetheretherketonen bei tribologischem Stress bei erhöhter Temperatur verbessert, ohne die Duktilität negativ zu beeinflussen.

Gegenstand der Erfindung ist eine thermoplastische Zusammensetzung
A) mit einer Matrixkomponente umfassend Polyetheretherketone und
B) mit einer Füllstoffkomponente,
dadurch gekennzeichnet, dass
30 bis 95 Gew.-% Polyetheretherketone als Matrixkomponente A) in Bezug auf die Gesamtzusammensetzung der thermoplastischen Zusammensetzung vorliegen, die das Polyetheretherketon Strukturelement der Formel I umfassen 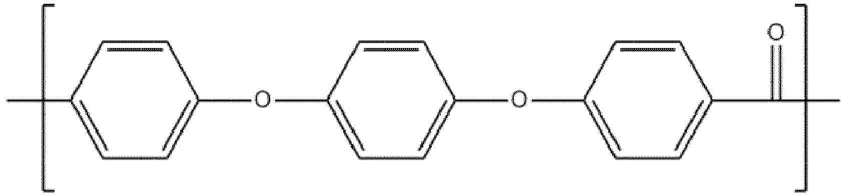
mit MVR von 10 bis 90 cm³/10min bestimmt bei 400°C, 2,16 kg Lastgewicht, Kapillare (Länge 8 mm * Durchmesser 2,095 mm, und
5 bis 70 Gew.-% anorganische und Kohlenstoff enthaltende Partikel als Füllstoffkomponente B) in der Gesamtzusammensetzung der thermoplastischen Zusammensetzung vorliegen, die in Bezug auf die Gesamtzusammensetzung
1 bis 20 Gew.-% hydrophobes Siliziumdioxid,
1 bis 20 Gew.-% Kohlenstoff-Fasern
1 bis 20 Gew.-% Titandioxid-Partikel,
1 bis 20 Gew.-% Graphit-Partikel und
1 bis 20 Gew.-% eines partikulären Schmierstoffs ausgewählt aus zweiwertigen,
metallischen Sulfiden und Erdalkalisulfaten umfassen,
wobei die Gesamtzusammensetzung 100 Gew.-% aufweist,
zur Verwendung als Bauteil in schmiermittelfreien tribologischen Anwendungen.

Ein weiterer Gegenstand ist ein Verfahren zur Herstellung der erfindungsgemäßen Zusammensetzungen, wobei das erfindungsgemäße Verfahren durch Compoundieren auf einem Extruder ausgeführt wird, indem zu einem Basisfeed mindestens ein Masterbatch enthaltend hydrophobes Siliziumdioxid zugeführt wird und downstream Kohlenstoff-Fasern zugeführt werden.

Ein weiterer Gegenstand ist die Verwendung der erfindungsgemäßen Zusammensetzungen zur Herstellung von Formteilen und daraus hergestellten Bauteilen in schmiermittelfreien tribologischen Anwendungen.

Die erfindungsgemäßen Zusammensetzungen, das erfindungsgemäße Verfahren und die erfindungsgemäße Verwendung werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahmen von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören. Werden nachfolgend %-Angaben gemacht, so handelt es sich, wenn nicht anders angegeben, um Angaben in Gewichts-%. Bei Zusammensetzungen beziehen sich die %-Angaben, wenn nicht anders angegeben auf die Gesamtzusammensetzung. Werden nachfolgend Mittelwerte angegeben, so handelt es sich, wenn nicht anders angegeben, um Massenmittel (Gewichtsmittel). Werden nachfolgend Messwerte angegeben, so wurden diese Messwerte, wenn nicht anders angegeben, bei einem Druck von 101325 Pa und einer Temperatur von 25 °C ermittelt.

Im Schutzumfang liegen im kommerziellen Handeln übliche Konfektionierungen und Abpackungen der erfindungsgemäßen Produkte sowohl als solche, als auch in eventuellen Zerkleinerungsformen soweit diese nicht in den Ansprüchen definiert sind.

Ein Vorteil der erfindungsgemäßen Zusammensetzungen und der daraus hergestellten Bauteile ist, dass die tribologischen Eigenschaften gegenüber dem Stand der Technik verbessert sind. Insbesondere wird die Reibung verringert und der Verschleiß erniedrigt. Dies zeigt die besonders vorteilhafte Verwendung von SiO₂-Partikeln in den erfindungsgemäßen Zusammensetzungen.
Ein weiterer Vorteil der erfindungsgemäßen Zusammensetzungen ist die verringerte Reibung, insbesondere in Systemen, in denen eine Komponente aus Metall besteht und die andere aus den erfindungsgemäßen Zusammensetzungen. Weiter vorteilhaft ist, dass die Reibungskoeffizienten auch bei erhöhter Temperatur niedrig sind. Zudem verbessern sich die Eigenschaften gegenüber auftretender Reibung.
Ein Vorteil der speziell angepassten Verfahrenseinstellungen ist einerseits die Herstellung einer homogenen Zusammensetzung und andererseits, dass in Bezug auf die eingesetzten Kohlenstoff-Fasern eine definierte Verkürzung der Kohlenstoff-Fasern erfolgt.
Besonders vorteilhaft können tribologische Anwendungen bei erhöhter Temperatur mit Hilfe der erfindungsgemäßen Zusammensetzungen realisiert werden.

Des Weiteren hat sich gezeigt, dass eine spezifische Faserlänge der Kohlenstoff-Fasern in Kombination mit den hydrophoben Siliziumdioxid-Partikeln einen zusätzlichen positiven Effekt auf die tribologischen Eigenschaften der Polyetheretherketone ausübt. Durch Einsatz von hydrophobiertem Siliziumdioxid, insbesondere hydrophobiertem, pyrogenem Siliziumdioxid konnte der negative Effekt, den übliche Siliziumpartikel auf die Schmelzviskosität bei der Herstellung der thermoplastischen Zusammensetzung ausüben deutlich verringert werden.

Um die Verarbeitbarkeit der thermoplastischen Zusammensetzung bei den notwendigen hohen Verarbeitungstemperaturen für die erfindungsgemäßen Zusammensetzungen weiter zu verbessern, wurde die Schmelzviskosität über eine Auswahl des Molekulargewichtes der Polyetheretherketone spezifisch an die Füllstoffkomponente angepasst. Die erfindungsgemäßen Zusammensetzungen enthalten als Matrixkomponente Polyetheretherketone mit einer MVR von 10 bis 90 cm³/10min, bevorzugt 15 bis 80 cm³/10min, mehr bevorzugt 20 bis 75 cm³/10min, insbesondere bevorzugt 30 bis 60 cm³/10min, bestimmt bei 400°C, einem Lastgewicht von 2,16 kg mit Hilfe einer Kapillare von einer Länge von 8 mm und einem Durchmesser von 2,095 mm.
Bevorzugt besteht die Matrixkomponente aus Polyetheretherketon.

Die eingesetzten Kohlenstoff-Fasern weisen vor der Verarbeitung bevorzugt eine Faserlänge von 4 bis 8 mm, mehr bevorzugt von 5 bis 7mm und einen Durchmesser von bevorzugt 5 bis 10 Mikrometer (µm) und mehr bevorzugt 6 bis 8 µm auf.
Die erfindungsgemäßen Zusammensetzungen zeichnen sich vorteilhaft aus, da durch die Verfahrenseinstellungen einerseits die Herstellung einer homogenen Zusammensetzung ermöglicht wird und andererseits auch in Bezug auf die eingesetzten Kohlenstoff-Fasern eine Verkürzung der eingesetzten Kohlenstoff-Fasern erfolgt. Dabei ist es besonders vorteilhaft, dass durch die Verfahrensführung die verkürzten Kohlenstoff-Fasern eine charakteristische Verteilung aufweisen.
Die erfindungsgemäßen Zusammensetzungen enthalten bevorzugt Kohlenstoff-Fasern mit einer Faserlänge von 15 bis 555 µm, bevorzugt weisen mindestens 95 % (bezogen auf die Anzahl der Fasern) der Kohlenstoff-Fasern eine Faserlänge von 15 bis 350 Mikrometer auf, mehr bevorzugt weisen mindestens 90 % der Kohlenstoff-Fasern eine Faserlänge von 20 bis 300 µm auf, besonders bevorzugt weisen mindestens 75 % der Kohlenstoff-Fasern eine Faserlänge von 25 bis 180 µm auf und insbesondere bevorzugt weisen mindestens 50 % der Kohlenstoff-Fasern eine Faserlänge von 30 bis 110 µm auf.

Als hydrophobes Siliziumdioxid der erfindungsgemäßen Zusammensetzungen wird vorzugsweise pyrogenes hydrophobes Siliziumdioxid eingesetzt.

Dem Fachmann ist bekannt wie pyrogene Siliziumdioxid Partikel produziert werden, bevorzugt werden diese durch oxidative Flammprozesse durch Zersetzung von Halogensilanen gewonnen.
Das hydrophobe pyrogene Siliziumdioxid weist vor der Verarbeitung eine Partikelgrößenverteilung D₅₀ von 2 bis 5 µm, bevorzugt 2,5 bis 4 µm, und einen D₁₀₀ von kleiner 150µm, bevorzugt einen D₁₀₀ von kleiner 100µm auf, wobei die Partikelgrößenverteilung nach ISO 13320 mit trocken dispergierten Partikeln durchgeführt wurde.
Die Partikelgrößen werden nach ISO 13320 bevorzugt mit einem Malvern Mastersizer 3000 im trockenen Luftstrom bestimmt.
Das hydrophobe pyrogene Siliziumdioxid weist einen Kohlenstoffgehalt von 1 bis 2 Gew.-% nach ISO 3262-20, bezogen auf das Siliziumdioxid auf.
Bevorzugt weist das hydrophobe pyrogene Siliziumdioxid Primärpartikel, mit einer Primärpartikelgröße von 10 bis 30 Nanometer auf
Bevorzugt weist das hydrophobe pyrogene Siliziumdioxid eine Modifikation auf, die Methyl-Gruppen aufweist.
Weiterhin bevorzugt weist das hydrophobe pyrogene Siliziumdioxid Agglomerate von Siliziumdioxid-Aggregaten mit Partikelgrößen der Agglomerate von 400 nm bis 100 Mikrometer auf. Dabei ist es weiter bevorzugt, wenn Agglomerate von Aggregatpartikeln des Siliziumdioxids Partikelgrößen von D₅₀ von 2 bis 20 Mikrometer eingesetzt werden, und insbesondere mit D₉₀ kleiner gleich 50 Mikrometer, bevorzugt sind Agglomerate mit D₅₀ von 2 bis 5 Mikrometer und bevorzugt mit D₉₀ kleiner gleich 20 Mikrometer. Es hat sich als besonders vorteilhaft erwiesen, wenn die Agglomerate aufgrund der Verarbeitungsbedingungen zumindest teilweise zu den Aggregatpartikeln aufgeschossen werden. Somit umfasst die Zusammensetzung vorzugsweise hydrophobes pyrogenes Siliziumdioxid umfassend Agglomerate von Aggregatpartikel von Siliziumdioxid, wobei das Siliziumdioxid oberflächlich Methyl-Gruppen aufweist.
Besonders bevorzugt ist hydrophobes pyrogenes Siliziumdioxid umfassend Primärpartikel von 10 Nanometer bis 100 Nanometer, bevorzugt von 10 bis 30 Nanometer, wobei insbesondere das Siliziumdioxid oberflächlich mit organofunktionellen Silanen ausgerüstet ist, vorzugsweise ist das Siliziumdioxid mit Alkyl-funktionellen Silanen ausgerüstet, besonders bevorzugt weist das Siliziumdioxid oberflächlich Methyl-Gruppen auf.

Die Graphit-Partikel der erfindungsgemäßen Zusammensetzungen weisen bevorzugt Partikelgrößenverteilungen mit D₁₀₀ von unter 70 µm, mehr bevorzugt unter 60 µm, besonders bevorzugt unter 50 µm und insbesondere bevorzugt unter 40 µm auf.
Bevorzugt weisen die Graphit-Partikel eine Partikelgrößenverteilung D₅₀ von 5 bis 15 µm, bevorzugt 8 bis 12 µm und einen D₁₀₀ von kleiner 50 µm, bevorzugt kleiner 40 µm auf.

Weiterhin bevorzugt weicht der häufigste Durchmesser (D_{häufigst}), also das Maximum der Verteilung, um nicht mehr als 30%, bevorzugt 25% des Messwertes vom D₅₀ ab. Mehr bevorzugt ist der D₅₀ um weniger als 30%, bevorzugt 25% kleiner als D_{häufigst}.
Weiter bevorzugt weisen die Graphit-Partikel eine Partikelgrößenverteilung mit D₅₀ von 5 bis 15 µm, mit einen D₁₀₀ von kleiner 50 µm und der D₅₀ ist weniger als 25% kleiner als der häufigste Durchmesser.
Der Kohlenstoffgehalt der Graphit-Partikel ist bevorzugt größer oder gleich 99 Gew.-%, insbesondere größer gleich 99,5 Gew.-%, bevorzugt größer 99,7 bis 99,99 Gew.-% in Bezug auf die Gesamtzusammensetzung der Graphit-Partikel von 100 Gew.-%.
Die Messung der Partikelgrößenverteilung wird nach ISO 13320 mit trocken dispergierten Partikeln durchgeführt.
Die Partikelgrößen werden nach ISO 13320 bevorzugt mit einem Malvern Mastersizer 3000 im trockenen Luftstrom bestimmt.

Bevorzugte Titandioxid-Partikel der erfindungsgemäßen Zusammensetzungen weisen eine äußere Hülle umfassend Silizium, Aluminium und/oder Zirkon enthaltende Metalloxide oder diese enthaltende Mischoxide auf, wobei die Titandioxid-Partikel zumindest teilweise bis vollständig mit der vorgenannten Hülle umhüllt sind. Bevorzugt sind die Titandioxid-Partikel vollständig mit einer Hülle aus Silizium, Aluminium und Zirkon enthaltenden Mischoxiden umhüllt. Vorzugsweise liegen die Titandioxid-Partikel mit vorzugsweise durchgängiger, äußerer Hülle umfassend Silizium, Aluminium und/oder Zirkon enthaltende Metalloxide oder diese enthaltende Mischoxide Kern-Hülle vor und wurden vorzugsweise in einem Plasma-Verfahren oder thermischen-Verfahren hergestellt. Somit sind die erfindungsgemäß eingesetzten Titandioxid-Partikel vorzugsweise Titandioxid-Kern-Hülle-Partikel synonym zu Titandioxid-Kern-Schale-Partikel, deren Kern Titandioxid aufweist und deren Hülle bzw. Schale aus einem Metalloxid ohne katalytische Eigenschaften, insbesondere ohne photokatalytische Eigenschaften, besteht. Insbesondere weisen die Titandioxid-Partikel eine vollständig geschlossene Hülle bzw. Schale auf. Diese Titandioxid-Partikel können somit auch als Kern-Hülle-Partikel mit einem Kern umfassend Titandioxid und einer Hülle umfassend aus Silizium, Aluminium und Zirkon enthaltenden Mischoxiden bezeichnet werden. Auf diese Weise wird verhindert, dass Titandioxid unter erhöhter Temperatur und/oder erhöhtem tribologischem Einfluss katalytisch aktive Zentren ausbilden, die zu einer beschleunigten Zersetzung der polymeren Matrix beitragen. Es wurde festgestellt, dass es ein Nachteil von Titandioxidpartikeln ohne äußere inerte Hülle ist, dass diese Titandioxidpartikel unter Einfluss von elektromagnetischer Strahlung, tribologischem Stress und/oder erhöhter Temperatur als katalytisch aktive Zentren wirken können. Um aber die mechanischen Vorteile des Titandioxids nutzen zu können und zugleich die negativen Folgen der Titandioxidpartikel zu vermeiden, werden vorzugsweise diese speziellen Titandioxid-Partikel eingesetzt, die mit einer schützenden äußeren Hülle versehen sind. Daher werden besonders bevorzugt Titandioxid-Partikel mit einer Hülle umfassend Silizium-, Aluminium- und/oder ZirkonVerbindungen, insbesondere deren Oxide, in thermoplastischen Zusammensetzungen eingesetzt. Die Oxide der vorgenannten Verbindungen können als SiO₂, Zirkondioxid, Al₂O₃ oder Mischoxide sowie deren silikatische Verbindungen, d.h. kristalline Verbindungen, der vorgenannten Verbindungen in der Hülle vorliegen. Diese Partikel sind hinsichtlich ihrer Eignung als katalytische Zentren in einer polymeren Matrix zu fungieren inaktiviert.
Bevorzugt weisen die Titandioxid-Partikel eine bimodale Partikelverteilung auf.
Bevorzugte Titandioxid-Partikel weisen eine Partikelgröße von 100 Nanometer (nm) bis 10 Mikrometer auf, besonders bevorzugt mit D₅₀ von 150 bis 600 nm, mehr bevorzugt mit D₅₀ von 250 bis 500nm.
Weiter bevorzugt weist die Partikelgrößenverteilung ein Maximum (D_{häufigst}) von 280 bis 350 nm, bevorzugt von 295 bis 330 nm auf.
Weiter bevorzugt weisen die Titandioxidpartikel bevorzugt eine bimodale Partikelgrößenverteilung auf, wobei das zweite Maximum im Bereich von 2,5 bis 6 µm, bevorzugt im Bereich von 3 bis 5µm liegt.
Weiter bevorzugt weisen die Partikelgrößen der Titandioxid-Partikel der bimodalen Verteilung ein Gewichtsverhältnis der beiden Bereiche (Bereich 1 enthält D_{häufigst}, Bereich zwei enthält das zweite Maximum) von 7 zu 1 bis 9,5 zu 1, bevorzugt von 8 zu 1 bis 9,3 zu 1 und besonders bevorzugt von 9 zu 1 (wobei bevorzugt eine Messungenauigkeit der Flächenverhältnisse von 3 % angenommen wird) auf.
Die Messung der Partikelgrößenverteilung wird nach ISO 13320 mit trocken dispergierten Partikeln durchgeführt.
Die Partikelgrößen werden nach ISO 13320 bevorzugt mit einem Malvern Mastersizer 3000 im trockenen Luftstrom bestimmt.
Bevorzugt sind die Titandioxid-Partikel Si-, Zr- und Al- oberflächenmodifiziert.
Weiter bevorzugt weisen die Titandioxidpartikel bevorzugt eine bimodale Partikelgrößenverteilung auf und sind oberflächenmodifiziert.
Weiter bevorzugt weisen die Titandioxidpartikel bevorzugt eine bimodale Partikelgrößenverteilung mit einem Maximum (D_{häufigst}) von 280 bis 350 nm (Bereich 1) und einem zweiten Maximum im Bereich 2 von 2,5 bis 6 µm auf und sind Si-, Zr- und Aloberflächenmodifiziert.

Die partikulären Schmierstoffe der erfindungsgemäßen Zusammensetzung sind ausgewählt aus zweiwertigen, metallischen Sulfiden und Erdalkalisulfaten, vorzugsweise ZnS und/oder BaSO₄. insbesondere ist der partikuläre Schmierstoff ZnS. Die partikulären Schmierstoffe weisen vorzugsweise eine Partikelgrößenverteilung D₉₀ von kleiner 20 µm, bevorzugt von kleiner gleich 15 µm, besonders bevorzugt 10 µm und insbesondere bevorzugt von kleiner gleich 5 µm auf.
Weiterhin weisen die partikulären Schmierstoffe bevorzugt einen D₅₀ von 500 bis 1000 nm, mehr bevorzugt von 600 bis 950 nm, besonders bevorzugt von 700 bis 900 nm und insbesondere bevorzugt von 750 bis 850 nm auf.
Weiterhin bevorzugt weist der partikuläre Schmierstoff ZnS einen D₅₀ von 500 bis 1000 nm und einen D₉₀ von kleiner 20 µm, insbesondere einen D₅₀ von 700 bis 900 nm und einen D₉₀ von kleiner gleich 5 µm auf.
Die Messung der Partikelgrößenverteilung wird nach ISO 13320 mit nass (Wasser) dispergierten Partikeln durchgeführt.
Die Partikelgrößen werden nach ISO 13320 bevorzugt mit einem Malvern Mastersizer 3000 bestimmt.

Umfangreiche Materialprüfungen wurden mit einer thermoplastischen Zusammensetzung umfassend 60 Gew.-% Polyetheretherketone als Matrixkomponente A) und 40 Gew.-% Füllstoffkompente B) umfassend 10 Gew.-% hydrophobierte SiO₂, 10 Gew.-% Graphit-Partikel, 10 Gew.-% Kohlenstoff-Fasern, 5 Gew.-% ZnS und 5 Gew.-% TiO₂ ,Gehalte jeweils in Bezug auf die Gesamtzusammensetzung der thermoplastischen Zusammensetzung von 100 Gew.-% durchgeführt. Für diese Zusammensetzung wurde überraschend festgestellt, dass mit den relativ hohen MVR der Polyetheretherketone ein exzellentes tribologisches Verhalten erhalten wird.
Bevorzugt ist eine thermoplastische Zusammensetzung umfassend 30 bis 95 Gew.-% Polyetheretherketone als Matrixkomponente A) die das Polyetheretherketon Strukturelement der Formel I umfassen 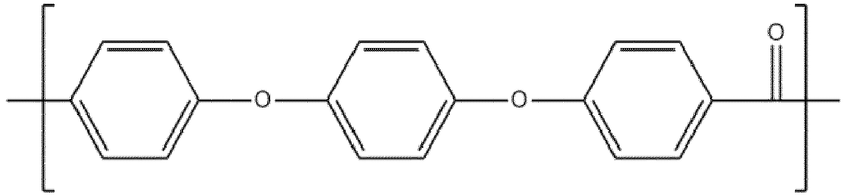
mit MVR von 10 bis 90 cm³/10min, bevorzugt 15 bis 80 cm³/10min, mehr bevorzugt 20 bis 75 cm³/10min, insbesondere bevorzugt 30 bis 60 cm³/10min bestimmt bei 400°C, 2,16 kg Lastgewicht, Kapillare mit einer Länge von 8 mm und einem Durchmesser von 2,095 mm, Einlaufwinkel 180°, und Füllstoffkomponente B), mit
2 bis 20 Gew.-% hydrophobem pyrogenem Siliziumdioxid,
2 bis 20 Gew.-% Kohlenstoff-Fasern,
1 bis 15 Gew.-% eines partikulären Schmierstoffs ausgewählt aus zweiwertigen, metallischen Sulfiden und Erdalkalisulfaten,
2 bis 20 Gew.-% Graphit-Partikel, und
1 bis 15 Gew.-% Titandioxid-Partikel, welche eine bimodale Partikelgrößenverteilung aufweisen, bezogen auf die Gesamtzusammensetzung

Besonders bevorzugt ist eine thermoplastische Zusammensetzung mit 30 bis 90 Gew.-% Polyetheretherketonen mit Strukturelementen der Formel I als Matrixkomponente A) mit MVR von 10 bis 90 cm³/10min, insbesondere bevorzugt 15 bis 80 cm³/10min, mehr bevorzugt 20 bis 75 cm³/10min, insbesondere bevorzugt 30 bis 60 cm³/10min bestimmt bei 400°C, 2,16 kg Lastgewicht, Kapillare mit einer Länge von 8 mm und einem Durchmesser von 2,095 mm, Einlaufwinkel 180°,
und mit
5 bis 15 Gew.-% hydrophobem pyrogenem Siliziumdioxid mit einer Partikelgrößenverteilung mit einem D50 von 2 bis 5 µm, bevorzugt 2,5 bis 4 µm, und einen D100 von kleiner 150µm, bevorzugt einen D100 von kleiner 100µm aufweist,
2 bis 8 Gew.-% ZnS als partikulärem Schmierstoff mit einer Partikelgröße Dso von 500 bis 1000 nm, bevorzugt von 600 bis 950 nm, besonders bevorzugt von 700 bis 900 nm und insbesondere bevorzugt von 750 bis 850 nm,
5 bis 15 Gew.-% Graphit-Partikel,
2 bis 8 Gew.-% Titandioxid-Partikel, welche eine bimodale Partikelgrößenverteilung aufweisen und Si-, Zr- und Al- oberflächenmodifiziert sind und
5 bis 15 Gew.-% Kohlenstoff-Fasern,
bezogen auf die Gesamtzusammensetzung der thermoplastischen Zusammensetzung mit 100 Gew.-%.

Eine besonders bevorzugte thermoplastische Zusammensetzung besteht zu 30 bis 81 Gew.-%aus den Polyetheretherketonen mit MVR von 10 bis 90 cm³/10min, insbesondere bevorzugt 15 bis 80 cm³/10min, mehr bevorzugt 20 bis 75 cm³/10min, insbesondere bevorzugt 30 bis 60 cm³/10min,
2 bis 8 Gew.-% ZnS als partikulärem Schmierstoff mit einer Partikelgrößenverteilung mit Dso von 500 bis 1000 nm und einen D₉₀ von kleiner 20 µm, insbesondere einen Dso von 700 bis 900 nm und einen D₉₀ von kleiner gleich 5 µm,
5 bis 15 Gew.-% Graphit mit einer Partikelgröße von 0,5 bis 30 µm auf, bevorzugt von 5 bis 20 µm, mehr bevorzugt von 5 bis 15 µm besonders bevorzugt .8 bis 12 µm,
2 bis 8 Gew.-% Titandioxid-Partikel, welche eine bimodale Partikelgrößenverteilung aufweisen mit einem Maximum (D_{häufigst}) von 280 bis 350 nm (Bereich 1) und einem zweiten Maximum im Bereich 2 von 2,5 bis 6 µm auf und weiterhin Si-, Zr- und Al- oberflächenmodifiziert sind,
5 bis 15 Gew.-% hydrophobem pyrogenem Siliziumdioxid mit einer Partikelgrößenverteilung mit einem D₅₀ von 2 bis 5 µm, bevorzugt 2,5 bis 4 µm, und einen D₁₀₀ von kleiner 150µm, bevorzugt einen D₁₀₀ von kleiner 100µm aufweist, und
5 bis 15 Gew.-% Kohlenstoffschnitt-Fasern mit einem Durchmesser von 5 bis 10 µm, bevorzugt 6 bis 8 µm und Faserlängen von 15 bis 555 µm,
bezogen auf die Gesamtzusammensetzung der thermoplastischen Zusammensetzung mit 100 Gew.-%.

Eine insbesondere bevorzugte thermoplastische Zusammensetzung besteht aus 30 bis 73,5 Gew.-% Polyetheretherketonen mit MVR von 10 bis 90 cm³/10min, insbesondere bevorzugt 15 bis 80 cm³/10min, mehr bevorzugt 20 bis 75 cm³/10min, insbesondere bevorzugt 30 bis 60 cm³/10min,
7,5 bis 12,5 Gew.-% hydrophobem pyrogenem Siliziumdioxid mit einen Kohlenstoffgehalt von 1 bis 2 Gew.-% nach ISO 3262-20, bezogen auf das Siliziumdioxid, mit einer Partikelgrößenverteilung mit einem D₅₀ von 2,5 bis 4 µm, und einen D₁₀₀ von kleiner 100µm, 2 bis 8 Gew.-% ZnS als partikulären Schmierstoff mit einer Partikelgrößenverteilung mit D₅₀ von 700 bis 900 nm und einen D₉₀ von kleiner gleich 5 µm,
7,5 bis 12,5 Gew.-% Graphit-Partikel mit einer Partikelgrößenverteilung mit D₅₀ von 5 bis 15 µm, bevorzugt 8 bis 12 µm und einen D₁₀₀ von kleiner 50 µm, bevorzugt kleiner 40 µm,
2 bis 8 Gew.-% Titandioxid-Partikel, welche eine bimodale Partikelgrößenverteilung aufweisen mit einem Maximum (D_{häufigst}) von 280 bis 350 nm (Bereich 1) und einem zweiten Maximum im Bereich 2 von 2,5 bis 6 µm auf, wobei das Gewichtsverhältnis der beiden
Bereiche von 7 zu 1 bis 9,5 zu 1, bevorzugt von 8 zu 1 bis 9,3 zu 1 und besonders bevorzugt von 9 zu 1 beträgt und weiterhin die Partikel Si-, Zr- und Al- oberflächenmodifiziert sind, und 7,5 bis 12,5 Gew.-% Kohlenstoff-Fasern mit einem Durchmesser von 6 bis 8 µm und, wobei mindestens 90 % der Kohlenstoff-Fasern eine Faserlänge von 20 bis 300 µm aufweisen, besonders bevorzugt weisen mindestens 75 % der Kohlenstoff-Fasern eine Faserlänge von 25 bis 180 µm auf und insbesondere bevorzugt weisen mindestens 50 % der Kohlenstoff-Fasern eine Faserlänge von 30 bis 110 µm auf,
bezogen auf die Gesamtzusammensetzung der thermoplastischen Zusammensetzung mit 100 Gew.-%.

Ein weiterer Gegenstand der Erfindung ist ein Verfahren zur Herstellung einer thermoplastischen Zusammensetzung sowie eine Zusammensetzung erhältlich nach dem Verfahren, indem das Verfahren mindestens einen Schritt i) aufweist, indem
i) die Herstellung eines ersten Masterbatches durch Mischen in einem Extruder, bevorzugt in einem Doppelschneckenextruder, mehr bevorzugt einem gleichläufigen Doppelschneckenextruder mit Dispergier- und Mischzonen,
   von 40 bis 95 Gew.-%, bevorzugt 60 bis 90 Gew.-%, Polyetheretherketon umfassend Strukturelemente der Formel I mit einer MVR von 10 bis 90 cm³/10min, insbesondere bevorzugt 15 bis 80 cm³/10min, mehr bevorzugt 20 bis 75 cm³/10min, insbesondere bevorzugt 30 bis 60 cm³/10min bestimmt bei 400°C, 2,16 kg Lastgewicht, Kapillare mit einer Länge von 8 mm und einem Durchmesser von 2,095 mm, Einlaufwinkel 180°,
   mit 5 bis 60 Gew.-%, bevorzugt 10 bis 40 Gew.-%, hydrophobem Siliziumdioxid, insbesondere hydrophobem pyrogenen Siliziumdioxid bei erhöhter Temperatur erfolgt, bevorzugt nahe am Schmelzpunkt des Polyetheretherketons oder höher, vorzugsweise bei 350 bis 500 °C, ein erster Masterbatch erhalten wird,
   und wobei die Herstellung des ersten Masterbatches bei einem Vakuumdruck von 1000 bis 5 mbar, bevorzugt von 800 bis 10 mbar, mehr bevorzugt von 500 bis 50 mbar und insbesondere bevorzugt von 300 bis 100 mbar, jeweils als Absolutdruck, erfolgt;
   wobei dieser erste Masterbatch einem Basisfeed zugeführt wird und downstream Kohlenstoff-Fasern zugeführt werden und die thermoplastische Zusammensetzung erhalten wird.
   Ein bevorzugtes erfindungsgemäßes Verfahren weist neben dem vorgenannten Verfahrensschritt i) einen weiteren Verfahrensschritt ii) auf, indem
ii) die Herstellung eines zweiten Masterbatches durch Mischen in einem Extruder, bevorzugt in einem Doppelschneckenextruder, mehr bevorzugt in einem gleichläufigen Doppelschneckenextruder mit Dispergier- und Mischzonen
   von 30 bis 90 Gew.-%, bevorzugt von 50 bis 80 Gew.-%, Polyetheretherketon umfassend Strukturelemente der Formel I mit einer MVR von 10 bis 90 cm³/10min bestimmt bei 400°C, 2,16 kg Lastgewicht, Kapillare mit einer Länge von 8 mm und einem Durchmesser von 2,095 mm, Einlaufwinkel 180°,
   mit 5 bis 40 Gew.-%, bevorzugt von 10 bis 30 Gew.-%, Titandioxid-Partikel und 5 bis 40 Gew.-%, bevorzugt 10 bis 30 Gew.-% eines partikulären Schmierstoffs, ausgewählt aus zweiwertigen, metallischen Sulfiden und Erdalkalisulfaten bei erhöhter Temperatur erfolgt, bevorzugt nahe am Schmelzpunkt des Polyetheretherketons oder höher, vorzugsweise bei 350 bis 500 °C, ein zweiter Masterbatch erhalten wird,
   wobei der erste und zweite Masterbatch einem Basisfeed zugeführt werden und downstream Kohlenstoff-Fasern zugeführt werden und die thermoplastische Zusammensetzung erhalten wird.
   Ein besonders bevorzugtes erfindungsgemäßes Verfahren weist neben den vorgenannten Verfahrensschritten i) und ii) einen weiteren Verfahrensschritt iii) auf, indem
iii) die Herstellung der Zusammensetzung erfolgt, indem eine Mischung umfassend, 0 bis 70 Gew.-%, bevorzugt von 1 bis 50 Gew.-%, mehr bevorzugt von 2 bis 20 Gew.-%, besonders bevorzugt von 3 bis 10 Gew.-%, Polyetheretherketon mit Strukturelementen der Formel I mit einer MVR von 10 bis 90 cm³/10min bestimmt bei 400°C, 2,16 kg Lastgewicht, Kapillare mit einer Länge von 8 mm und einem Durchmesser von 2,095 mm, Einlaufwinkel 180°,
   den ersten Masterbatch und
   den zweiten Masterbatch
   bei erhöhter Temperatur durch Mischen in einem Extruder hergestellt wird, bevorzugt in einem Doppelschneckenextruder, mehr bevorzugt in einem gleichläufigen Doppelschneckenextruder mit Dispergier- und Mischzonen, bevorzugt nahe am Schmelzpunkt des Polyetheretherketons oder höher, vorzugsweise bei 350 bis 550 °C, wobei dieser Mischung downstream sukzessive Graphit-Partikel und Kohlenstoff-Fasern zugesetzt werden und gemischt wird, vorzugsweise bei 350 bis 550 °C
   und die thermoplastische Zusammensetzung erhalten wird.
Die in den Verfahrensschritten nicht aufgeführten Füllstoffe der erfindungsgemäßen Zusammensetzungen können bereits im Basisfeed enthalten sein oder später zugegeben werden, bevorzugt werden keine Füllstoffe nach Zugabe der Kohlenstoff-Fasern zugegeben.
Wobei sich die vorgenannten Angaben im jeweiligen Verfahrensschritt in Gew.-% auf die Gesamtzusammensetzung von 100 Gew.-% des ersten Masterbatches in Schritt i), die Gesamtzusammensetzung von 100 Gew.-%des zweiten Masterbatches in Schritt ii) und die Gesamtzusammensetzung von 100 Gew.-% der Zusammensetzung im Schritt iii) beziehen.
Das Gewichtsverhältnis, bevorzugt im Verfahrensschritt iii), von erstem Masterbatch zu zweitem Masterbatch wird vorzugsweise im Verhältnis 0,1 (1 zu 10) bis 10 (10 zu 1), bevorzugt von 0,5 bis 5, mehr bevorzugt 1 bis 3 eingestellt.
Die Herstellung des ersten und zweiten Masterbatches erfolgt vorzugsweise bei 380 bis 450 °C in einem Extruder. Auch die Herstellung der thermoplastischen Zusammensetzung erfolgt vorzugsweise bei 380 bis 450 °C in einem Extruder.
Bevorzugt werden Kohlenstoff-Fasern eingesetzt, die eine Faserlänge von 4 bis 8 mm, mehr bevorzugt von 5 bis 7mm und einen Durchmesser von bevorzugt 5 bis 10 Mikrometer (µm) und mehr bevorzugt 6 bis 8 µm aufweisen.
Nach dem Schritt iii) im erfindungsgemäßen Verfahren kann die thermoplastische Zusammensetzung abgekühlt und konfektioniert, bevorzugt granuliert werden, oder es werden direkt Formteile hergestellt, welche dann abgekühlt werden.
Die oben genannten Bevorzugungen der Füllstoffkomponenten gelten sinnentsprechend auch für das erfindungsgemäße Verfahren.

Die erfindungsgemäßen thermoplastischen Zusammensetzungen und die thermoplastischen Zusammensetzungen erhältlich nach dem erfindungsgemäßen Verfahren werden zur Herstellung von dreidimensionalen Formteilen verwendet.
Ein weiterer Gegenstand der Erfindung sind Bauteile, wie bevorzugt Halbzeuge, Profile, Filamente und Folien umfassend die thermoplastische Zusammensetzung, wobei die Herstellung der Formteile dem Fachmann geläufig ist. Diese sind erhältlich in einem
a) Spritzguss-Verfahren, umfassend Ein- bis Mehrkomponenten-Spritzguss-Verfahren,
b) Fused Deposition Modeling (FDM; Schmelzschichtung) oder Fused Filament Fabrication (FFF),
c) Pressverfahren,
d) Extrusionsverfahren umfassend Co-Extrusionsverfahren, optional mit Kalandrieren oder z.B. Filmblasen und/oder
e) in einem Material-abtragenden Verfahren.

Erhaltene Formteile, Halbzeuge und Profile können mit üblichen Fügeverfahren für Thermoplaste wie z.B. Strahlungs-, Vibrations-, Heizelement-, Ultraschallschweissen oder Kleben weiterverarbeitet und verbunden werden. Somit sind auch Gegenstand der Erfindung Bauteile, insbesondere integrale Bauteile aus der thermoplastischen Zusammensetzung. Als Granulate werden insbesondere Granulate verstanden, die in Spritzguss-, Extrusions- oder Pressverfahren und/oder in kleineren Partikelgrössen (Pulver) für pulverbasierte Verfahren wie das Lasersinterverfahren eingesetzt werden können. Auch eine Beschichtung von z.B. metallischen Komponenten mit der thermoplastischen Zusammensetzung ist möglich.
Die Granulate weisen bevorzugt eine Partikelgröße im Bereich von 0,5 bis 10 mm und weisen runde, oval oder eckige Querschnitte auf. Bevorzugt sind zylindernahe Formen.

Die erfindungsgemäßen Formteile werden zur Herstellung von Bauteilen in tribologischen Anwendungen verwendet, bevorzugt als Maschinenelemente wie Lager oder Zahnräder, sowie Teile davon.
Die thermoplastischen Zusammensetzungen werden bevorzugt als sogenannte Tribo-Compounds eingesetzt, da sie eine besondere Eignung für hoch-tribologisch beanspruchte Bauteile, Komponenten und Maschinenelemente zeigen, wie beispielsweise Radial- oder Axiallager (Gleitlager), die zumindest in der Reibfläche eine Schicht aus der thermoplastischen Zusammensetzung aufweisen.
Lager oder andere erfindungsgemäße Formteile können beispielsweise sehr dünn nur im Reibbereich mit einer thermoplastischen Zusammensetzung ausgestattet sein. Beispiele sind dünne Reibschichten der thermoplastischen Zusammensetzung auf Stahlhülse/Stahlband (z.B. als Folie) aufgebracht oder auch andere Reibschichten. Weiterhin können die Bauteile oder Komponenten mit der Reibschicht integral aus der thermoplastischen Zusammensetzung bestehen. Zusätzlich können Hybridkonstruktionen (Mehrkomponentenbauteile oder Verbundbauteile) auch aus unterschiedlichen Kunststoffen: z.B. Tribocompound plus Stützschicht aus alternativem Kunststoff und/oder weitere Bereiche aus anderen Werkstoffen hergestellt werden. Weiterhin können Hybridkomponenten oder Hybridkonstruktionen (Mehrkomponentenbauteile) zusätzlich zur erfinderischen thermoplastischen Zusammensetzung weitere davon abweichende polymere Komponenten und/oder Metall basierte Werkstoffe aufweisen. Weiterhin können Hybrid-Gleitlager mit metallischen Stützbereichen und dünneren Bereichen aus den thermoplastischen Zusammensetzungen verwendet werden.

Auch eine Kombination mit geschäumten Kunststoff-Bereichen im Leichtbau und bei Anwendungen mit reduzierten bewegten Massen ist ebenfalls einfach möglich. Des Weiteren sind Kombinationen mit polymerbasierten, faserverstärkten Compsites (z.B. Tapes oder Organobleche) möglich.
Insgesamt können Verbundbauteile enthaltend oder bestehend aus den erfindungsgemäßen thermoplastischen Zusammensetzungen und nicht tribologisch optimierte polymere Zusammensetzungen und/oder weitere Werkstoffe realisiert werden.
Die erfindungsgemäßen thermoplastischen Zusammensetzungen sind grundsätzlich zur Herstellung oder als Teilkomponente für alle tribologisch beanspruchten Bauteile wie Lager, Schienen, Wälzelemente, ggf. Zahnräder, etc. geeignet. Die Bauteile können entweder ganz oder nur teilweise (im Gleitbereich) aus der thermplastischen Zusammensetzung hergestellt werden. Ferner können die thermoplastischen Zusammensetzungen in Anwendungen verwendet werden, in dem die Komponenten trocken reiben, wie beispielsweise Kunststoff-auf-Kunststoff oder Kunststoff-auf-Metall, wie bei einer Stahlwelle.
Im Äquivalenzbereich der Erfindung liegen Anwendungen gleichgearteter Zusammensetzungen und deren Form- und Bauteile im Betrieb mit einem Schmierstoff, wie Öl, Fett, etc..
Ein Vorteil der erfindungsgemäßen Verwendung zeigt sich im Verschleiß gegenüber Metalloberflächen. So sind in Abhängigkeit von den gewählten Versuchsbedingungen, wie der gewählten Legierung, Oberflächenrauheit des Metall-Reibpartners, Lastbedingungen resultierend u.a. aus Relativgeschwindigkeit, Druck und Temperatur in der Reibungsfläche etwa in einem Block-auf-Ring-Versuch die Verschleißraten für Bauteile bestehend aus den thermoplastischen Zusammensetzungen deutlich reduziert worden und es werden sehr geringe Reibungskoeffizienten ermittelt.

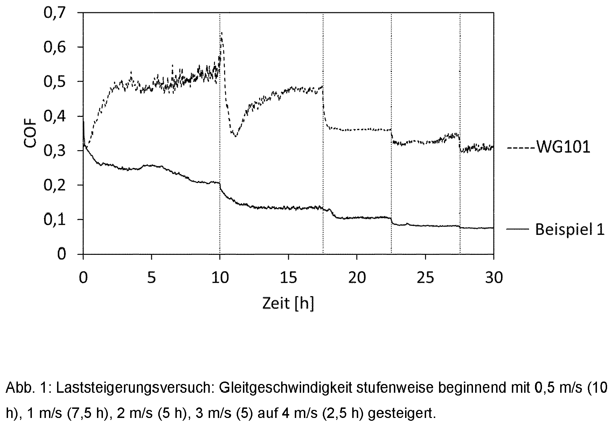

In Abbildung 1 sind in einem Laststeigerungsversuch bei einem Druck von 4 MPa mit stufenweiser zunehmender Geschwindigkeit die Reibungskoeffizienten des erfindungsgemäßen Beispiels 1 und eines kommerziellen Materials WG 101 der Firma Victrex (CompEx 2) dargestellt. Die Steigerungsdetails sind im beschreibenden Text zur Tabelle 2 angegeben. Deutlich erkennbar sind die niedrigeren Reibungskoeffizienten des erfindungsgemäßen Formteils.
Besonders vorteilhaft ist, dass Bauteile aus den erfindungsgemäßen Zusammensetzungen nach einer Geschwindigkeitsänderung keinerlei Anpassungsprobleme verursachen. Die Reibung stellt sich sehr schnell auf einen neuen konstanten Wert ein, wesentlich ist, dass die Reibung nicht schwankt, also kein sogenanntes Einschwingverhalten zeigt. Dies ist besonders vorteilhaft, da Änderungen der Laufgeschwindigkeit, z.B. in einem konzentrischem Lauflager also die Rotationsgeschwindigkeit, keine zusätzlichen Belastungen in anderen Bauteilen zur Folge haben, also z.B. hohe Drehmomentsprünge, die an der Achse eines konzentrischen Lagers wirken.

### Materialien:

PEEK: Polyetheretherketon der Evonik mit unterschiedlichen MVR
SiO₂: fumed Silica, hydrophobiert, C-Gehalt 1,2 Gew.-% (ISO 3262-20); Partikeldurchmesser (trocken dispergiert) D₅₀ 3,13 µm, D₁₀₀ < 80 µm
ZnS: Partikelgröße (nass dispergiert) Dso 0,80 µm, D₉₀ < 5 µm
Kohlenstoff-Fasern: Sigrafil C C6-4.0/240-T190
Graphit-Partikel: Partikelgröße (trocken dispergiert) D50 9,3µm, D100 < 35 µm
TiO₂: Partikeldurchmesser (trocken dispergiert) D (häufigst, max) 315 nm, D (bimod, max) 3,5 µm; Si-, Zr- und Al- oberflächenmodifiziert

**Beispiel 1:** Zusammensetzung basierend auf PEEK mit MVR 34 cm³/10min (Prüfgewicht 2,16 kg/ 400°C)
**Beispiel 2:** Zusammensetzung basierend auf PEEK mit MVR 72 cm³/10min (Prüfgewicht 2,16 kg/ 400°C)
Herstellung der thermoplastischen Zusammensetzung im Doppelschneckenextruder:
Masterbatch 1: 80 Gew.-% PEEK und 20 Gew.-% SiO₂, extrudiert (Massetemperatur 439 °C, Gehäusetemperatur 390 °C), unter Anwendung eines Vakuumdruckes zur Entlüftung von ca. 300 bis 100 mbar absolut (an der Zugabeposition der Kieselsäure).
Masterbatch 2: 60 Gew.-% PEEK, 20 Gew.-% TiO₂ und 20 Gew.-% Zinksulfid, (Massetemperatur 428 °C, Gehäusetemperatur 390 °C).
Zu dem Basisfeed des Extruders (5 Gew.-% des jeweiligen PEEK) wurden 50 Gew.-% Masterbatch 1 und 25 Gew-% Masterbatch 2 und 5 Gew.-% gemeinsam zugefüttert, downstream wurden sukzessive je 10 Gew.-% Graphit und 10 Gew.-% Kohlenstoff-Fasern zugefüttert. Die Massetemperatur betrug 439 °C und die Gehäusetemperatur 390 °C. Das Produkt wird am Ende der Extrusion granuliert.
Damit weisen die erfindungsgemäßen Zusammensetzungen der Beispiele 60 Gew.-% PEEK, 10 Gew.-% SiO₂ Partikel, 5 Gew.-% ZnS Partikel, 10 Gew.-% Graphit Partikel, 5 Gew.-% TiO₂ Partikel und 10 Gew.-% Kohlenstoff-Fasern auf.
Ein Vergleichsbeispiel (CompEx 1) weist 60 Gew.-% PEEK (VESTAKEEP 2000, Produkt der Evonik), 10 Gew.-% ZnS Partikel, 10 Gew.-% Graphit Partikel, 10 Gew.-% TiO₂ Partikel und 10 Gew.-% Kohlenstoff-Fasern auf.
Ein weiteres Vergleichsbeispiel (CompEx 2) ist WG101, ein kommerzielles Produkt der Victrex.

**Prüfkörper:** Die Granulate wurden in Platten spritzgegossen, die Dimension der Platten waren 4 mm Dicke und besaßen eine Fläche von 50 mm * 50 mm

Die Prüfkörper wurden als kubische Blöcke ausgefräst. Sie weisen eine Prüffläche von 4x4 mm² bei einer Länge von 10 mm auf. Die Fasern waren im Wesentlichen in der Prüfebene ausgerichtet, die Vektoren der Reibungskraft und der Ausrichtungsvektor der Fasern standen orthogonal zueinander.

Zur Bestimmung der **tribologischen Eigenschaften** wurden Block-auf-Ring (block on ring) und Stift-auf-Scheibe (pin-on disk) Prüfungen durchgeführt, die Prüfkörper waren identisch dimensioniert:
Gemessen wurde bei verschiedenen Geschwindigkeiten (v = 0.5, 1, 2, 3 und 4 m/s) und mit unterschiedlichen Anpressdrücken (Drucklasten) (p = 1, 2, 4, 8 und 10 MPa). Nach einer Einlaufphase begann die Prüfphase. Der Block war aus dem Prüfmaterial geformt, der Ring und die Scheibe sind aus Stahl (100Cr6H). Die Messung der Verschleißrate erfolgte durch Bestimmung des Masseverlustes. Die Messungen wurden bei unterschiedlichen Temperaturen durchgeführt ohne Verwendung von Schmiermitteln.
Bestimmt wurden Reibungskoeffizienten (friction coefficient, COF, Reibwert) und Verschleißrate Wₛ (wear rate, [10⁻⁶ mm³/Nm]). Die Berechnung der Verschleißrate beruht auf dem Masseverlust des Prüfkörpers nach der Formel: Wₛ= (Δm)/ρνtFₙ, wobei Δm der Masseverlust, ρ die Dichte des Prüfmaterials, v die Gleitgeschwindigkeit und t die Prüfdauer ist. Fₙ ist die Auflagekraft des Prüfkörpers.
Die Werte der Tabellen 1a bis 1d wurden bei 23°C auf dem Block-auf-Ring Prüfstand ermittelt. Die Einlaufphase betrug 2 h, die Prüfphase 20 h. Der Stahlring wies eine Rautiefe (Rz) von 2 µm und einen arithmetischen Mittenrauwert (Rauheit, Ra) von 0,2 µm auf.

**Tabelle 1a: Reibungskoeffizienten mit einem Anpressdruck von 1 MPa in Abhängigkeit von der Gleitgeschwindigkeit, 23°C**

| | Reibungskoeffizient; 1 MPa | | | | |
|---|---|---|---|---|---|
| | 0,5 m/s | 1 m/s | 2 m/s | 3 m/s | 4 m/s |
| Beispiel 1 | 0,24 - 0,26 | 0,2 - 0,21 | 0,16 - 0,17 | 0,12 - 0,14 | 0,07 - 0,08 |
| Beispiel 2 | 0,26 - 0,28 | 0,25 - 0,26 | 0,17 - 0,18 | 0,13 - 0,14 | 0,11 - 0,12 |
| CompEx 2 | 0,31 - 0,32 | 0,32 - 0,34 | 0,38 - 0,39 | 0,31 - 0,32 | 0,24 - 0,25 |

Die Reibungskoeffizienten der erfindungsgemäßen Beispiele 1 und 2 sind geringer als vom kommerziellen Produkt Victrex WG101. Zudem nehmen die Reibungskoeffizienten der erfindungsgemäßen Beispiele 1 und 2 mit zunehmender Gleitgeschwindigkeit deutlich ab, während die Reibungskoeffizienten von CompEx 2 ausgehend von einer Geschwindigkeit von 0,5 m/s bis zur Geschwindigkeit von 2 m/s sogar zunehmen.

**Tabelle 1b: Reibungskoeffizienten mit einem Anpressdruck von 2 MPa in Abhängigkeit von der Gleitgeschwindigkeit, 23°C**

| | Reibungskoeffizient; 2 MPa | | | | |
|---|---|---|---|---|---|
| | 0,5 m/s | 1 m/s | 2 m/s | 3 m/s | 4 m/s |
| Beispiel 1 | 0,18- 0,19 | 0,14 - 0,15 | 0,13 - 0,14 | 0,08 - 0,09 | 0,06 - 0,07 |
| Beispiel 2 | 0,26 - 0,27 | 0,18 - 0,19 | 0,1 - 0,11 | 0,07 - 0,08 | 0,03 - 0,04 |
| CompEx 2 | 0,48 - 0,49 | 0,46 - 0,47 | 0,35 - 0,36 | 0,27 - 0,28 | 0,27 - 0,28 |

Die geringen Reibungskoeffizienten der erfindungsgemäßen Beispiele 1 und 2 nehmen mit zunehmender Geschwindigkeit und erhöhtem Anpressdruck von 2 MPa weiter ab.

**Tabelle 1c: Reibungskoeffizienten bei einem Anpressdruck von 4 MPa in Abhängigkeit von der Gleitgeschwindigkeit**

| | Reibungskoeffizient; 4 MPa | | | | |
|---|---|---|---|---|---|
| | 0,5 m/s | 1 m/s | 2 m/s | 3 m/s | 4 m/s |
| Beispiel 1 | 0,22- 0,23 | 0,14 - 0,15 | 0,11 - 0,12 | 0,17 - 0,18 | 0,16 - 0,17 |
| Beispiel 2 | 0,17 - 0,18 | 0,12 - 0,14 | 0,08 - 0,09 | 0,1 - 0,11 | 0,04 - 0,05 |
| CompEx 2 | 0,47 - 0,49 | 0,35 - 0,37 | 0,27 - 0,28 | 0,23 - 0,24 | 0,21 - 0,22 |

Der Reibungskoeffizient des erfindungsgemäßen Beispiels 2 nimmt auch bei weiter erhöhtem Anpressdruck von 4 MPa mit zunehmender Geschwindigkeit kontinuierlich weiter ab. Für die Zusammensetzung des Beispiels 1 wird ein Minimum des Reibungskoeffizienten bei einer Geschwindigkeit von 2 m/s ermittelt.

**Tabelle 1d: Reibungskoeffizienten bei einem Anpressdruck von 8 MPa in Abhängigkeit von der Gleitgeschwindigkeit**

| | Reibungskoeffizient; 8 MPa | | | | |
|---|---|---|---|---|---|
| | 0,5 m/s | 1 m/s | 2 m/s | 3 m/s | 4 m/s |
| Beispiel 1 | 0,17- 0,19 | 0,16 - 0,17 | 0,12 - 0,14 | 0,08 - 0,09 | 0,07 - 0,08 |
| Beispiel 2 | 0,22 - 0,23 | 0,18 - 0,19 | 0,15 - 0,16 | 0,1 - 0,11 | 0,08 - 0,09 |
| CompEx 2 | 0,43 - 0,44 | 0,33 - 0,35 | 0,24 - 0,26 | 0,17 - 0,18 | 0,16- 0,17 |

Die Reibungskoeffizienten des erfindungsgemäßen Beispiels 1 sind geringer als die des Beispiels 2. Beide Reibungskoeffizienten nehmen mit weiter erhöhtem Anpressdruck von 8 MPa mit zunehmender Geschwindigkeit kontinuierlich weiter ab. Beispiel 1 weist ähnlich gute Reibungskoeffizienten bei 8 MPa auf wie bei 2 MPa.

Die Werte der Tabelle 2 stellen Laststeigerungsversuche dar, sie wurden bei 23°C auf dem Block-auf-Ring Prüfstand ermittelt. Ohne Einlaufphase wurde die Gleitgeschwindigkeit stufenweise beginnend mit 0,5 m/s (10 h), 1 m/s (7,5 h), 2 m/s (5 h), 3 m/s (5) auf 4 m/s (2,5 h) gesteigert. Der Stahlring wies eine Rautiefe (Rz) von 2 µm und einen arithmetischen Mittenrauwert (Rauheit, Ra) von 0,2 µm auf.

**Tabelle 2: Verschleißraten in Abhängigkeit vom Anpressdruck bei Steigerung der Geschwindigkeit von 0,5 m/s auf 4 m/s**

| | Verschleißrate [10⁻⁶ mm³/Nm] | | | |
|---|---|---|---|---|
| | 1 MPa | 2 MPa | 4 MPa | 8 MPa |
| Beispiel 1 | 0,51 - 0,53 | 0,45 - 0,47 | 0,32 - 0,34 | 0,28 - 0,29 |
| Beispiel 2 | 0,23 - 0,25 | 0,25 - 0,26 | 0,35 - 0,37 | 0,26 - 0,27 |
| CompEx 2 | 0,73 - 0,75 | 0,72 - 0,73 | 0,65 - 0,66 | 0,32 - 0,34 |

Die Verschleißraten der erfindungsgemäßen Beispiele 1 und 2 sind geringer als die von Victrex WG101. Zudem nehmen die Verschleißraten des erfindungsgemäßen Beispiels 1 mit zunehmendem Anpressdruck deutlich und kontinuierlich ab.
In Abbildung 1 sind die Laststeigerungsversuche für Probekörper des Beispiels 1 und CompEx 2 bei einem Anpressdruck von 4 MPa gezeigt, die Messwerte zum Reibungskoeffizienten wurden bei 20°C ermittelt.

Die Werte der Tabellen 3a und 3b wurden bei 23°C und 100°C auf dem Stift-auf-Scheibe Prüfstand ermittelt. Die Prüfphase betrug 5000 m. Der Stahlring wies eine Rautiefe (Rz) von 5 µm und einen arithmethischen Mittenrauwert (Rauheit, Ra) von 0,4 µm auf.

**Tabelle 3a: Stift-auf-Scheibe, (Pin-on Disk) Verschleißrate bei 1 m/s**

| | | Verschleißrate [10⁻⁶ mm³/Nm] | |
|---|---|---|---|
| | | 4 MPa | 10 MPa |
| Beispiel 1 | 25 °C | 4,91 | 1,5 |
| Beispiel 2 | 25 °C | 2,5 | 1,08 |
| Beispiel 1 | 100 °C | 2,77 | 1,03 |
| Beispiel 2 | 100 °C | 2,43 | 1,07 |

**Tabelle 3b: Stift-auf-Scheibe (Pin-on Disk) Gleitreibungskoeffizient bei 1 m/s**

| | | Reibungskoeffizient | |
|---|---|---|---|
| | | 4 MPa | 10 MPa |
| Beispiel 1c | 25 °C | 0,23 | 0,07 |
| Beispiel 2b | 25 °C | 0,12 | 0,09 |
| Beispiel 1c | 100 °C | 0,05 | 0,05 |
| Beispiel 2b | 100 °C | 0,08 | 0,03 |

Die Verschleißrate und die Reibungskoeffizienten der erfindungsgemäßen Beispiele nehmen unter erhöhtem Anpressdruck und auch bei zunehmender Temperatur deutlich ab.

Die Werte der Tabellen 4a, 4b, 5a und 5b wurden bei 25°C auf dem Block-auf-Ring Prüfstand ermittelt. Der Stahlring wies einen arithmetischen Mittenrauwert (Rauheit, Ra) von 0,1 µm -0,2 µm auf.

**Tabelle 4a: Verschleißraten, im Vergleich zu dem Material der KS Gleitlager (EP 1511625 B2, Probe PEEK 6)**

| | Verschleißrate [10⁻⁶ mm³/Nm]¹ | | | |
|---|---|---|---|---|
| Bedingungen | 1 MPa; 3 m/s | 1 MPa; 4 m/s | 3 MPa; 1 m/s | 5 MPa; 1 m/s |
| Beispiel 1 | 0,59 | 0,87 | 0,32 | 0,84 |
| CompEx 1 | 0,91 | 1,62 | 0,33 | 1,98 |

Auch aus diesen Versuchen geht hervor, dass die Bauteile aus den erfindungsgemäßen Zusammensetzungen gegenüber dem Stand der Technik vorteilhaft sind. Insbesondere zeigen diese Versuche die vorteilhafte Verwendung von SiO₂ Partikeln in tribologischen Anwendungen. Dies zeigt sich in diesen Versuchen besonders bei hohem Lastdruck oder hoher Geschwindigkeit.

**Tabelle 5a: Verschleißraten, Block on ring, in Abhängigkeit des Quotienten aus Drucklast und Geschwindigkeit (p/v [MPa * s/m])**

| | Verschleißrate [10⁻⁶ mm³/Nm]¹ | | | |
|---|---|---|---|---|
| Quotient | 1 MPa : 2 m/s | 1 MPa : 4 m/s | 3 MPa : 2 m/s | 4 MPa : 2 m/s |
| Beispiel 1 | 0,9 | 0,6 | 0,3 | 0,3 |
| CompEx 1 | 1,5 | 3,1 | 2,8 | 2,2 |

**Tabelle 5b: Reibungskoeffizienten, Block on ring, in Abhängigkeit des Quotienten aus Drucklast und Geschwindigkeit (p/v [MPa * s/m])**

| | Reibungskoeffizient | | | |
|---|---|---|---|---|
| Quotient | 1 MPa : 2 m/s | 1 MPa : 4 m/s | 3 MPa : 2 m/s | 4 MPa : 2 m/s |
| Beispiel 1 | 0,27 | 0,18 | 0,12 | 0,09 |
| CompEx 1 | 0,28 | 0,25 | 0,31 | 0,17 |

Die Verschließraten und die Reibungskoeffizienten sind durchweg niedriger als die des Standes der Technik. Dies zeigt ebenfalls deutlich den vorteilhaften Effekt der Zugabe von SiO₂-Partikeln in der Kunststoffkomponente eines tribologischen Systems.

## Patentansprüche

1. Thermoplastische Zusammensetzung
A) mit einer Matrixkomponente umfassend Polyetheretherketone und
B) mit einer Füllstoffkomponente
**dadurch gekennzeichnet, dass**
30 bis 95 Gew.-% Polyetheretherketone als Matrixkomponente A) in Bezug auf die Gesamtzusammensetzung der thermoplastischen Zusammensetzung vorliegen, die das Polyetheretherketon Strukturelement der Formel I umfassen 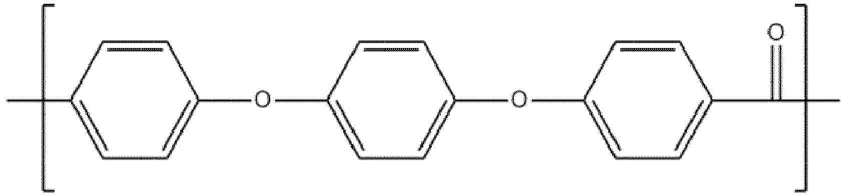
mit MVR von 10 bis 90 cm³/10min bestimmt bei 400°C, 2,16 kg Lastgewicht, Kapillare mit einer Länge von 8 mm und einem Durchmesser von 2,095 mm, Einlaufwinkel 180°, und
5 bis 70 Gew.-% anorganische und Kohlenstoff enthaltende Partikel als Füllstoffkomponente B) in der Gesamtzusammensetzung der thermoplastischen Zusammensetzung vorliegen, die in Bezug auf die Gesamtzusammensetzung
1 bis 20 Gew.-% hydrophobes Siliziumdioxid,
1 bis 20 Gew.-% Kohlenstoff-Fasern
1 bis 20 Gew.-% Titandioxid-Partikel,
1 bis 20 Gew.-% Graphit-Partikel und
1 bis 20 Gew.-% eines partikulären Schmierstoffs ausgewählt aus zweiwertigen, metallischen Sulfiden und Erdalkalisulfaten umfassen,
wobei die Gesamtzusammensetzung 100 Gew.-% aufweist,
zur Verwendung als Bauteil in schmiermittelfreien tribologischen Anwendungen.

2. Zusammensetzung nach Anspruch 1 **dadurch gekennzeichnet, dass** die Gesamtzusammensetzung der thermoplastischen Zusammensetzung als Füllstoffkomponente umfasst
2 bis 20 Gew.-% hydrophobes, bevorzugt hydrophobes pyrogenes Siliziumdioxid,
2 bis 20 Gew.-% Kohlenstoff-Fasern,
1 bis 15 Gew.-% eines partikulären Schmierstoffs ausgewählt aus zweiwertigen, metallischen Sulfiden und Erdalkalisulfaten,
2 bis 20 Gew.-% Graphit-Partikel, und
1 bis 15 Gew.-% Titandioxid-Partikel,
wobei die Gesamtzusammensetzung der thermoplastischen Zusammensetzung 100 Gew.-% beträgt.

3. Zusammensetzung nach einem der Ansprüche 1 oder 2 **dadurch gekennzeichnet, dass** die Zusammensetzung
30 bis 81 Gew.-% Polyetheretherketone enthaltend Strukturelemente der Formel I,
5 bis 15 Gew.-% hydrophobes Siliziumdioxid, insbesondere hydrophobes pyrogenes Siliziumdioxid,
2 bis 8 Gew.-% eines partikulären Schmierstoffs ausgewählt aus zweiwertigen, metallischen Sulfiden und Erdalkalisulfaten,
5 bis 15 Gew.-% Graphit-Partikel,
2 bis 8 Gew.-% Titandioxid-Partikel, und
5 bis 15 Gew.-% Kohlenstoff-Fasern, umfasst,
wobei die Gesamtzusammensetzung der thermoplastischen Zusammensetzung 100 Gew.-% beträgt.

4. Zusammensetzung nach einem der Ansprüche 1 bis 3 **dadurch gekennzeichnet, dass** die Zusammensetzung
30 bis 73,5 Gew.-% Polyetheretherketone enthaltend Strukturelemente der Formel I,
7,5 bis 12,5 Gew.-% hydrophobes Siliziumdioxid, insbesondere hydrophobes pyrogenes Siliziumdioxid,
2 bis 8 Gew.-% eines partikulären Schmierstoffs ausgewählt aus zweiwertigen, metallischen Sulfiden und Erdalkalisulfaten,
7,5 bis 12,5 Gew.-% Graphit-Partikel,
2 bis 8 Gew.-% Titandioxid-Partikel, und
7,5 bis 12,3 Gew.-% Kohlenstoff-Fasern, umfasst, wobei die Gesamtzusammensetzung der thermoplastischen Zusammensetzung 100 Gew.-% beträgt.

5. Zusammensetzung nach einem der Ansprüche 1 bis 4 **dadurch gekennzeichnet, dass** die Kohlenstoff-Fasern eine Faserlänge von 15 bis 555 Mikrometer aufweisen, insbesondere bevorzugt weisen mindestens 50% der Kohlenstoff-Fasern eine Faserlänge von 30 bis 110 Mikrometer auf.

6. Zusammensetzung nach einem der Ansprüche 1 bis 5 **dadurch gekennzeichnet, dass** das hydrophobe pyrogene Siliziumdioxid eine Partikelgrößenverteilung D50 von 2 bis 5 µm, bevorzugt 2,5 bis 4 µm, und einen D100 von kleiner 150µm, bevorzugt einen D100 von kleiner 100µm aufweist, wobei die Partikelgrößenverteilung nach ISO 13320 mit trocken dispergierten Partikeln durchgeführt wurde.

7. Zusammensetzung nach einem der Ansprüche 1 bis 6 **dadurch gekennzeichnet, dass** das hydrophobe pyrogene Siliziumdioxid einen Kohlenstoffgehalt von 1 bis 2 Gew.-% aufweist nach ISO 3262-20, bezogen auf das Siliziumdioxid.

8. Zusammensetzung nach einem der Ansprüche 1 bis 7 **dadurch gekennzeichnet, dass** die Titandioxid-Partikel eine bimodale Partikelgrößenverteilung aufweisen.

9. Zusammensetzung nach einem der Ansprüche 1 bis 8 **dadurch gekennzeichnet, dass** die Graphit-Partikel eine Partikelgrößenverteilung D50 von 5 bis 15 µm, bevorzugt 8 bis 12 µm und einen D100 von kleiner 50 µm, bevorzugt kleiner 40 µm aufweisen, wobei die Partikelgrößenverteilung nach ISO 13320 trocken dispergierten Partikeln durchgeführt wurde.

10. Zusammensetzung nach einem der Ansprüche 1 bis 9 **dadurch gekennzeichnet, dass** der partikuläre Schmierstoff ZnS ist und eine Partikelgrößenverteilung mit einen Dso von 500 bis 1000 nm und einen D₉₀ von kleiner 20 µm aufweist.

11. Verfahren zur Herstellung einer thermoplastischen Zusammensetzung nach einem der Ansprüche 1 bis 10, indem das Verfahren mindestens einen Schritt i) aufweist, indem i) die Herstellung eines ersten Masterbatches durch Mischen in einem Extruder von Polyetheretherketon enthaltend Strukturelemente der Formel I 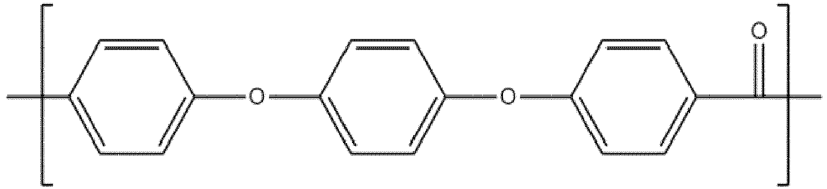
mit hydrophobem Siliziumdioxid, insbesondere hydrophobem pyrogenen Siliziumdioxid, bei erhöhter Temperatur und wobei die Herstellung des ersten Masterbatches bei einem Vakuumdruck von 1000 bis 5 mbar absolut erfolgt, und ein erster Masterbatch erhalten wird;
wobei dieser erste Masterbatch einem Basisfeed zugeführt wird und downstream Kohlenstoff-Fasern zugeführt werden und die thermoplastische Zusammensetzung erhalten wird.

12. Verfahren nach Anspruch 11 **dadurch gekennzeichnet, dass** der erste Masterbatch bei einem Vakuumdruck von 300 bis 100 mbar absolut hergestellt wird.

13. Verfahren nach Anspruch 11 oder 12, **dadurch gekennzeichnet, dass**
i) die Herstellung des ersten Masterbatches bei 380 bis 450 °C erfolgt, besonders bevorzugt in einem Extruder, insbesondere bevorzugt in einem gleichläufigen Doppelschneckenextruder, und/oder
ii) die Herstellung des zweiten Masterbatches bei 380 bis 450 °C erfolgt, besonders bevorzugt in einem Extruder, insbesondere bevorzugt in einem gleichläufigen Doppelschneckenextruder und/oder
iii) die Herstellung der thermoplastischen Zusammensetzung bei 380 bis 450 °C erfolgt.

14. Granulat erhältlich nach einem der Ansprüche 11 bis 13, **dadurch gekennzeichnet, dass** die thermoplastische Zusammensetzung in einem Extruder, besonders bevorzugt in einem Extruder, insbesondere bevorzugt in einem gleichläufigen Doppelschneckenextruder hergestellt wird und an der Extruderdüse des Extruders ausgetragen, geformt, optional abgetrennt und abgekühlt wird.

15. Formteile erhältlich nach Anspruch 14, **dadurch gekennzeichnet, dass** das Formteil mittels eines Extruders hergestellt wird und an der Extruderdüse des Extruders ausgetragen, geformt, optional abgetrennt und abgekühlt wird.

16. Verwendung der Formteile nach Anspruch 15 als Bauteil in schmiermittelfreien tribologischen Anwendungen.
